**Europäisches Patentamt**

**European Patent Office**

**Office européen des brevets**

(19)

(11) Numéro de publication : **0 394 129 B1**

# FASCICULE DE BREVET EUROPEEN

(12)

(45) Date de publication du fascicule du brevet :
**06.07.94 Bulletin 94/27**

(51) Int. Cl.⁵ : **G21C 19/313**

(21) Numéro de dépôt : **90401049.3**

(22) Date de dépôt : **18.04.90**

(54) **Installation et procédé de régénération de pièges froids chargés en hydrure et oxyde de métal liquide.**

(30) Priorité : **20.04.89 FR 8905261**

(43) Date de publication de la demande :
**24.10.90 Bulletin 90/43**

(45) Mention de la délivrance du brevet :
**06.07.94 Bulletin 94/27**

(84) Etats contractants désignés :
**BE DE GB**

(56) Documents cités :
**EP-A- 0 012 074**
**PATENT ABSTRACTS OF JAPAN vol. 3, no. 63 (C-47) 30 mai 1979 ; & JP-A-54 37012**
**PATENT ABSTRACTS OF JAPAN vol. 9, no. 301 (C-316)(2024) 28 novembre 85 ; & JP-A-60 138 027**

(73) Titulaire : **COMMISSARIAT A L'ENERGIE ATOMIQUE**
**31/33, rue de la Fédération**
**F-75015 Paris Cédex 15 (FR)**

(72) Inventeur : **Latge, Christian, Résidence "La Grande Terrasse"**
**Impasse Sainte Eutrope**
**F.13100 Aix en Provence (FR)**

(74) Mandataire : **Mongrédien, André et al**
**c/o BREVATOME**
**25, rue de Ponthieu**
**F-75008 Paris (FR)**

EP 0 394 129 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention se rapporte à une installation et à un procédé de régénération de pièges froids chargés en hydrure, éventuellement en tritiure, et en oxyde d'un métal liquide tel que le sodium utilisé dans les réacteurs à neutrons rapides, notamment pour les circuits secondaires.

On sait que le sodium liquide est pollué au cours du fonctionnement d'une centrale par de l'hydrogène qui diffuse au travers des parois des générateurs de vapeur ainsi que par de l'oxygène et de l'hydrogène pouvant provenir notamment de réactions sodium-eau consécutivement à une fuite du générateur de vapeur. Il importe de retirer ces impuretés du sodium pour limiter la corrosion des structures par l'oxygène, la fragilisation des aciers par l'hydrogène, mais également pour faciliter la détection de la réaction sodium-eau en maintenant une concentration en hydrogène faible, et pour limiter les risques de bouchage avec les cristaux d'oxyde et d'hydrure qui pourraient se former dans les points froids. On a pour cela envisagé de nombreux modèles de pièges froids qui comportent généralement un réservoir où le sodium liquide est refroidi au-dessous de la température de cristallisation de l'hydrure et de l'oxyde. Les cristaux se fixent sur des structures de rétention à l'intérieur du piège telles que des filtres garnis de laine métallique.

L'encrassement progressif des pièges peut conduire à les régénérer périodiquement en les purgeant des impuretés solides. La méthode connue, dont il existe quelques variantes, présente comme caractéristiques essentielles une vidange préliminaire du piège froid du sodium liquide qui le remplit et le chauffage du piège vidé pour décomposer thermiquement les impuretés. A 420°C, l'hydrure de sodium contenu dans le piège se décompose suivant la réaction (1) :

$$NaH \rightarrow Na + 1/2.H_2 \qquad (1)$$

Le sodium libéré par la réaction est à l'état liquide et l'hydrogène réagit avec l'oxyde de sodium suivant la réaction (2) :

$$Na_2O + 1/2.H_2 \rightarrow Na + NaOH \qquad (2)$$

De la soude caustique est donc formée, qui peut ensuite se solidifier (au-dessous de 320°C) lorsque le chauffage cesse.

Cette méthode présente divers inconvénients. Tout d'abord, la réaction (2) est lente, ce qui nécessite un traitement prolongé et, en pratique, impossible à effectuer avec le piège monté sur le réacteur ; il convient donc de changer le piège froid, si possible lors d'un arrêt programmé du réacteur et de traiter piège rempli d'impuretés, plus tard, à l'extérieur du réacteur. D'autres difficultés proviennent de la présence dans l'hydrogène de tritium qu'il n'est possible de rejeter dans l'atmosphère qu'en respectant des normes de rejet très strictes, donc à des débits très faibles ; de plus, une partie se combine pour former de la soude alors qu'il peut être intéressant de l'isoler pour le recueillir. Le dégagement d'hydrogène gazeux provoque une surpression (qu'il faut d'ailleurs souvent entretenir par un courant d'hydrogène pour achever la décomposition chimique de l'oxyde de sodium), ce qui engendre donc la nécessité de contrôler en permanence la pression. La présence de soude entraîne, compte tenu de la température élevée, une rapide corrosion généralisée de la paroi d'acier inoxydable du piège et de sa garniture. L'hydrogène gazeux peut aussi fragiliser l'acier. Enfin, tous les pièges froids ne se prêtent pas à une vidange aisée du sodium liquide et de la soude.

Il est possible d'éviter de rejeter le tritium dans l'atmosphère en le fixant sur certains corps solides. Les autres inconvénients ne sont toutefois pas évités.

On cherche au contraire avec l'invention à régénérer efficacement et rapidement des pièges froids en éliminant totalement les impuretés sans devoir décharger le piège froid du réacteur. Un autre objet essentiel de l'invention consiste à séparer les composés hydrogénés et oxygénés de manière à pouvoir, le cas échéant, recueillir facilement le tritium. La formation de soude est évitée, ce qui a pour corrolaire l'absence de corrosion et constitue une différence essentielle avec le brevet EP-A- 0 012 074 du même déposant, qui décrit un procédé de lavage du piège à la soude. On avait cru profiter de la facilité de dissolution des impuretés dans la soude, mais les problèmes de corrosion ont conduit à l'abandon de ce procédé.

L'installation caractéristique de l'invention comprend un circuit rempli de métal liquide sur lequel au moins un piège à régénérer est disposé, le circuit étant muni de moyens pour établir une circulation du métal liquide dans le circuit et à travers le piège, de moyens pour régler la température du métal liquide à des valeurs suffisantes pour dissoudre l'oxyde et l'hydrure, d'un dispositif pour soutirer l'hydrogène et le tritium dissous et d'une dérivation équipée d'un moyen de rétention de l'oxygène.

Le dispositif pour soutirer l'hydrogène et le tritium est envisagé sous la forme d'une membrane de perméation dont une face communique avec le circuit de métal liquide et l'autre face avec un circuit de pompage en dépression, qui peut être muni d'un solide fixant l'hydrogène. Le transfert de l'hydrogène au travers de la membrane est assuré par une différence de pression partielle contrôlée par les conditions de fonctionnement de l'installation.

Le moyen de rétention de l'oxygène est de préférence constitué d'un piège froid où l'oxyde est cristallisé à nouveau.

Le procédé constitutif de l'invention consiste à faire circuler du métal liquide à travers le piège à une température suffisante pour dissoudre progressivement l'hydrure et l'oxyde, à soutirer de l'hydrogène dissous de manière à maintenir la concentration en hydrogène dissous au-dessous de la saturation, et à faire passer le métal liquide dans un autre piège froid refroidi à une température inférieure à la température de cristallisation de l'oxyde et supérieure à la température de cristallisation de l'hydrure.

Le métal liquide peut avantageusement être réchauffé avant que l'hydrogène soit soutiré afin d'améliorer la perméation au travers de la membrane, puis être refroidi à la température supérieure à la température de cristallisation de l'hydrure.

On va maintenant passer au commentaire des figures suivantes annexées à titre illustratif et non limitatif :

- la figure 1 est un schéma général d'une réalisation de l'invention ;
- la figure 2 détaille un exemple de dispositif de soutirage de l'hydrogène ; et
- la figure 3 est un graphique explicatif du procédé.

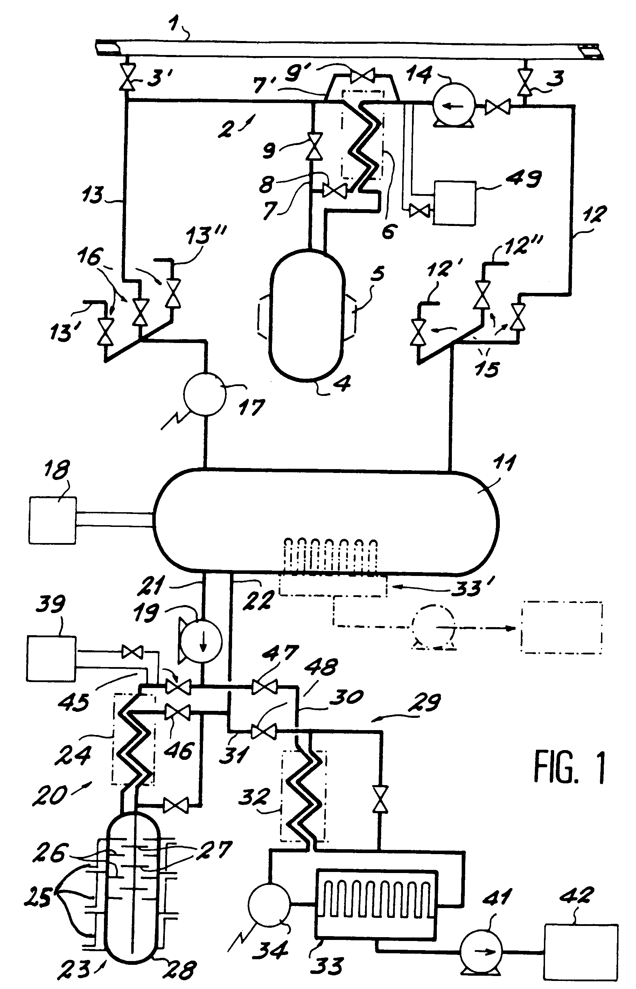

On distingue sur la figure 1 une conduite 1 de circulation de sodium liquide dans une boucle secondaire d'un réacteur nucléaire à neutrons rapides. Une dérivation de piège froid 2 est établie sur la conduite 1 dont elle peut être séparée par deux vannes 3, 3' à ses extrémités.

Un piège froid 4 à régénérer est installé sur la dérivation 2. Il se compose essentiellement d'un réservoir garni à l'intérieur de structures de rétention des impuretés solides, et il est entouré d'une jaquette 5 parcourue par un fluide de refroidissement. De très nombreux types de pièges froids existent, pour lesquels l'invention est applicable ; on n'entrera pas ici dans une description plus détaillée mais il est le cas échéant possible de se reporter au brevet EP-A-0 319 409 correspondant au FR-A 2 624 032 par exemple.

La dérivation 2 forme près du piège froid 4 un premier dispositif échangeur thermique 6 grâce auquel le sodium arrivant au piège froid 4 est refroidi en passant à proximité du sodium venant de quitter ce piège froid. Une conduite de dérivation 7 peut être prévue pour interrompre l'échange thermique en empêchant, en liaison avec deux vannes 8 et 9, le sodium liquide ayant quitté le piège froid 4 de passer par le premier échangeur 6. Cet échangeur permet, lorsque l'on utilise le piège froid pour purifier le sodium, de contrôler la température moyenne de fonctionnement du piège froid.

L'installation comprend également un réservoir de sodium liquide 11 relié à la dérivation 2 par une canalisation d'aspiration 12 et une canalisation de refoulement 13 qui forme avec elles un circuit de sodium liquide, dont la circulation peut être forcée à travers le piège froid 4 au moyen d'une première pompe 14. Des conduites d'aspiration et de refoulement analogues ou semblables 12', 12'', 13', 13'' parallèles aux précédentes peuvent également se raccorder au réservoir 11 et à des dérivations sur d'autres boucles secondaires non représentées du réacteur, si bien que l'installation de régénération peut être commune à toute la centrale et être utilisée successivement pour plusieurs pièges froids. Des vannes 15 et 16 établies sur chacune des conduites d'aspiration et de refoulement 12, 13, etc., assurent une commutation correcte.

Les autres éléments essentiels sur le circuit de sodium liquide consistent en un premier réchauffeur 17 situé sur la partie de la conduite de refoulement 13 la plus proche du réservoir 11 et destiné à apporter les calories nécessaires au maintien du stockage à la température voulue, un indicateur de bouchage 49 établi sur la dérivation 2 et qui est utilisé pour le contrôle de la concentration des impuretés lorsque le piège froid est utilisé pour purifier le sodium de la boucle secondaire, et un premier dispositif de mesure 18 de la teneur d'oxygène et d'hydrogène dans le réservoir 11.

Un bipasse 7' équipé d'une vanne 9' permet de court-circuiter le piège froid à régénérer 4, pendant la phase de chauffage du sodium du réservoir de stockage 11.

Un circuit de dérivation 20 se raccorde également au réservoir 11. Il comprend une conduite de sortie 21 sur laquelle une seconde pompe 19 est installée, une conduite de retour 22 et un piège froid de stockage 23 auquel les deux conduites 21 et 22 aboutissent après avoir formé un deuxième échangeur thermique 24 à son entrée. Le piège froid de stockage 23 n'est pas lui-même régénéré et sert à retenir exclusivement l'oxygène sous forme d'oxyde. Il peut donc avoir une grande capacité et a été choisi conforme aux indications du brevet EP-A- 0 260 193 correspondant au FR-A- 2 603 497 auquel on renvoie donc. Mais il est évident que tout type de piège froid peut être utilisé à ce niveau. On rappellera simplement que le piège froid de stockage 23 indiqué ci-dessus est refroidi par une pluralité de modules de refroidissement 25 disposés en série le long de son enveloppe cylindrique 28 et que l'intérieur de l'enveloppe contient une succession de plateaux 26 et 27 parallèles et alternés qui délimitent un espace vide en chicane : les plateaux 26 sont annulaires et délimitent un espace vide central, alors que les plateaux 27 sont des disques qui délimitent un intervalle annulaire avec l'enveloppe 28. Chacun des plateaux 26 et 27 est constitué d'une plaque ajourée garnie de laine métallique : quand le piège de stockage 23 est neuf, le sodium passe sensiblement en ligne droite à travers les plateaux 26 et 27, puis, quand ceux-ci sont encrassés, le sodium les contourne sans diminution de l'efficacité de rétention des impuretés cristallisées grâce à l'allongement du trajet. L'étagement de plusieurs modules de refroidissement 25 permet de faire varier les emplacements où le dépôt d'impuretés prédomine et donc de bien répartir l'encrassement. La conduite d'entrée 21 débouche en haut du piège froid de stockage 23 et la conduite de sortie 22 en bas de celui-ci après l'avoir traversé axialement.

Une sous-dérivation 29 est branchée sur la dérivation 20 : la conduite d'entrée 21 bifurque et forme une branche d'entrée 30, alors que la conduite de sortie 22 bifurque également et forme une branche de sortie 31. Les deux branches 30 et 31 se rapprochent pour former un troisième échangeur thermique 32 et se rejoignent aux extrémités d'un système de perméation dit "perméateur" 33. Un réchauffeur 34 est par ailleurs disposé sur la branche d'entrée 30 entre le troisième échangeur thermique 32 et le perméateur 33.

Des vannes 45 à 48 sont établies sur ces différentes canalisations pour favoriser, limiter ou interrompre les écoulements de sodium par le piège froid de stockage 23 et le perméateur 33. Un second dispositif de mesure 39 de la teneur en oxygène et en hydrogène est enfin installé sur la conduite d'entrée 21.

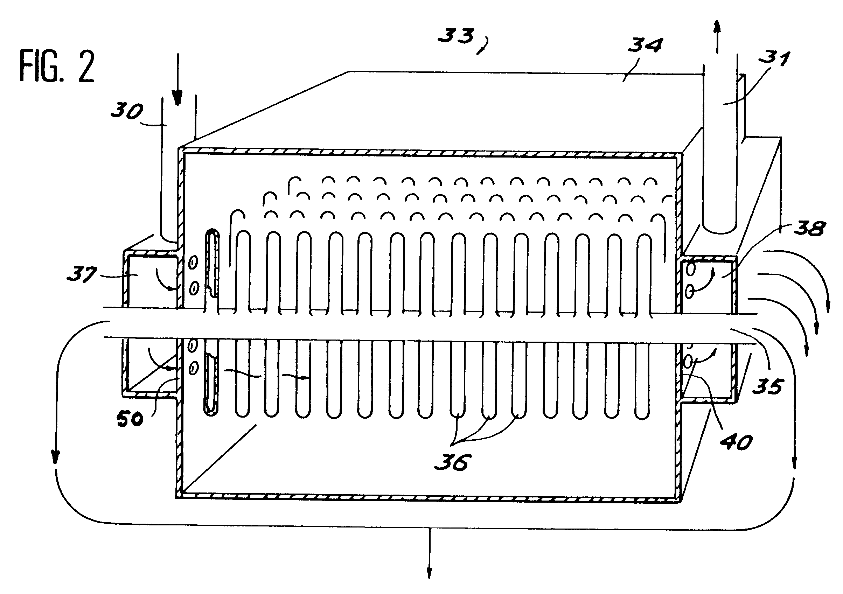

Le perméateur 33, détaillé figure 2, est constitué d'une enveloppe 34 traversée par une conduite en boucle 35 hérissée d'appendices 36 qui s'étendent à l'intérieur de l'enveloppe 34 et constituent une membrane de perméation. Ils sont constitués d'un matériau à fort taux de perméation, comme par exemple le nickel, en forme de doigt, au nombre de quelques centaines ou quelques milliers et ont quelques centièmes de millimètre d'épaisseur. Les branches 30 et 31 aboutissent à l'enveloppe 34 par l'intermédiaire de collecteurs 37 et 38 séparés des appendices 36 par des plaques perforées 50 et 40 qui répartissent l'écoulement et le rendent sensiblement perpendiculaire aux appendices 36.

La conduite en boucle 35 aboutit à une pompe à vide 41 et à un réservoir de stockage 42 garni d'un matériau de rétention de l'hydrogène, par exemple sous forme de copeaux d'un alliage de lanthane, nickel et manganèse.

La face interne des appendices 36 donnant sur la conduite en boucle 35 est maintenue en dépression par rapport à la face externe baignée par le sodium afin de faciliter le transfert de l'hydrogène contenu dans le sodium vers la conduite sous vide, au travers de la membrane.

On a esquissé sur la figure 1 une disposition un peu différente où la sous-dérivation 29 serait omise et où le perméateur -référencé alors 33'- serait dans le réservoir 11, ce qui conduirait à une disposition simplifiée mais empêcherait l'emploi du second réchauffeur 34 qui renforce sensiblement l'efficacité de la régénération.

Pour effectuer une régénération, dès que les vannes 3 et 3'ont été fermées pour isoler la dérivation 2 de la boucle 1, la première pompe 14 est mise en action pour établir une circulation forcée de sodium liquide à travers le réservoir 11 et le piège froid 4 à régénérer. Le premier réchauffeur 17 est également mis en action alors que le système de refroidissement 5 du piège froid 4 voit son fonctionnement interrompu, de sorte que le sodium mis en circulation par la première pompe 14 est porté à une température assez élevée telle que 520°C.

Il est capital de remarquer que les réactions de décomposition (1) et (2) énoncées plus haut ne peuvent se produire à cause de la présence du sodium. A leur place, des dissolutions des dépôts d'hydrure et d'oxyde se produisent progressivement suivant les réactions de dissociation ionique (3) et (4) :

$$NaH \rightarrow Na^+ + H^- \qquad (3)$$
$$Na_2O \rightarrow 2Na^+ + O^{--} \qquad (4).$$

Quand on constate au moyen du premier organe de mesure 18 que le sodium est saturé en oxygène et en hydrogène, on en fait passer une partie à travers le perméateur 33 après avoir ouvert les vannes 47 et 48 et mis en action la seconde pompe 19 et le réchauffeur 34. Ce dernier instaure une température de surchauffe telle que 600°C dans le perméateur 33. La filtration des ions d'hydrogène, y compris du tritium, à travers les appendices 36 est facilitée et ces ions sont pompés jusqu'au réservoir de stockage 42 où ils sont adsorbés par l'alliage. Un traitement thermique ultérieur de ce dernier pour en extraire l'hydrogène et le tritium peut facilement être entrepris.

Les ions d'oxygène plus gros ne traversent pas la membrane de perméation et demeurent donc dans le sodium liquide.

Lorsque la concentration d'hydrogène est à nouveau stabilisée, les vannes 45 et 46 sont ouvertes. Du sodium passe également par le piège froid de stockage 23, qui est refroidi par les modules 25 pour que l'oxyde s'y dépose suivant une réaction inverse de la réaction (4).

Il est possible d'instaurer une température au point froid du piège froid de stockage 23 qui soit inférieure à la température de cristallisation de l'oxyde mais supérieure à la température de cristallisation de l'hydrure. On peut ainsi prévoir par exemple une température de 495°C si les deux températures de cristallisation évoquées sont respectivement 515°C et 480°C. Il en résulte que l'hydrure et en particulier le tritium ne demeurent pas dans le piège froid de stockage 23 et qu'une ségrégation des deux impuretés principales est accomplie. Il est facile de nettoyer le piège froid de stockage 23 après un processus de régénération si on le désire : il suffit de le démonter de l'installation et de le laver à la soude sans précaution particulière, l'oxyde de sodium n'étant pas radioactif.

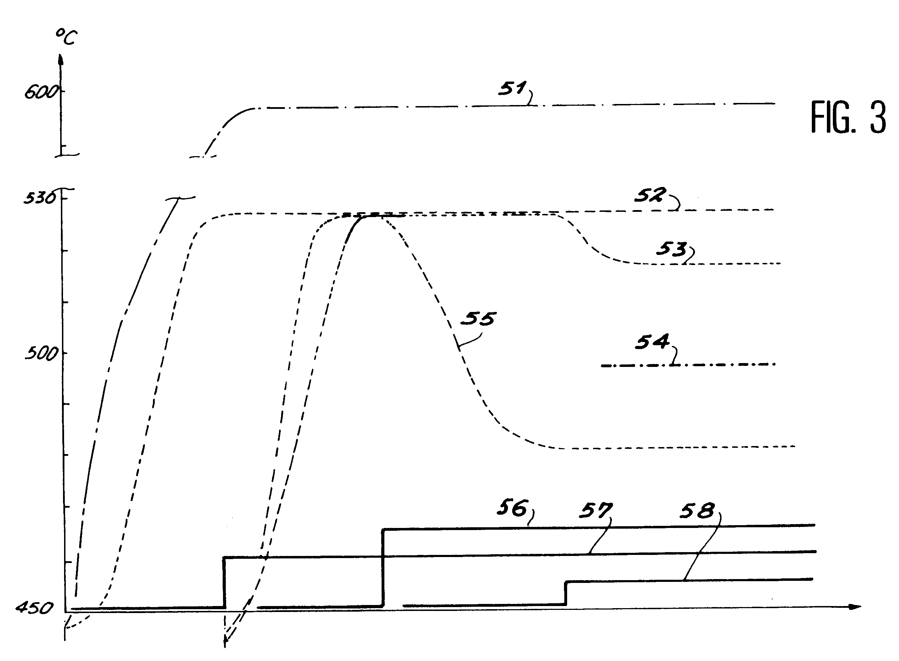

La figure 3 explicite le procédé. Les abscisses représentent le temps, les ordonnées des températures ou des débits (l'échelle de ceux-ci n'est pas indiquée). Les courbes 51 à 58 représentent respectivement la température dans le perméateur 33, la température dans le réservoir 11 et le piège à régénérer 4, la température de cristallisation de l'oxyde, la température dans le piège froid de stockage 23, la température de cristallisation de l'hydrure, le débit passant par le perméateur 33, le débit passant par le piège à régénérer 4 et le débit passant par le piège froid de stockage 23. On distingue bien les étapes transitoires du procédé et en particulier la chute de la concentration de l'hydrure dès que le perméateur 33 est utilisé, ce qui se traduit par une différence entre les températures de cristallisation de l'hydrure et de l'oxyde et permet donc de ne pas recueillir d'hydrure dans le piège froid de stockage 23.

Le processus est poursuivi jusqu'à la régénération complète du piège froid 4. Lorsque l'hydrogène ou l'oxygène a été entièrement éliminé, il est évidemment possible de fermer le circuit aboutissant au dispositif de rétention correspondant au moyen des vannes 45, 46 ou 47, 48. Pour certains types de réacteurs, notamment ceux pour lesquels une réaction sodium-eau paraît exclue, les pollutions par hydrures seront prépondérantes.

La durée de l'ensemble des opérations dépend, bien entendu, essentiellement de la quantité d'impuretés à éliminer contenues dans le piège 4, du dimensionnement du perméateur 33 et de l'ensemble des conditions opératoires choisies. A titre d'exemple, pour le réacteur Super Phénix 1, la durée de l'opération peut être d'une semaine pour un piège froid ayant purifié le sodium pendant huit années de fonctionnement.

Ce procédé de régénération peut être avantageusement utilisé pour récupérer le tritium produit dans une couverture tritigène de réacteur de fusion, en particulier lorsque le tritium est extrait d'une couverture tritigène constituée de l'eutectique lithium-plomb, puis introduit dans un circuit de métal liquide au travers d'une membrane de perméation et enfin cristallisé sous forme solide dans un piège froid : l'extraction du tritiure de sodium est menée conformément à l'invention quand le piège froid est plein.

Il est inutile de démonter le piège froid 4, ce qui aurait été nécessaire pour certains d'entre eux avant de procéder à une vidange, et l'installation décrite est construite en même temps que la centrale et ne nécessite aucun branchement particulier pour la faire fonctionner.

**Revendications**

1. Installation de régénération de pièges froids (4) chargés en hydrure et en oxyde d'un métal liquide, caractérisée en ce qu'elle comprend un circuit (11, 12, 13, 20, 29) rempli de métal liquide sur lequel au moins un piège à régénérer (4) est disposé, le circuit étant muni de moyens (14) pour établir une circulation du métal liquide dans le circuit et à travers le piège, de moyens (17) pour régler la température du métal liquide à des valeurs suffisantes pour dissoudre l'oxyde et l'hydrure, d'un dispositif (33) pour soutirer l'hydrogène et le tritium dissous et d'une dérivation (20) équipée d'un moyen de rétention de l'oxygène.

2. Installation de régénération selon la revendication 1, caractérisée en ce que le dispositif (33) pour soutirer l'hydrogène et le tritium est constitué d'une membrane (35, 36) de perméation de l'hydrogène et du tritium dont une face communique avec le circuit de métal liquide et l'autre face avec un circuit de pompage en dépression par rapport au circuit de métal liquide, ainsi que d'un réservoir (42) établi sur le circuit de pompage et garni d'un solide fixant l'hydrogène et le tritium.

3. Installation de régénération selon la revendication 1, caractérisée en ce que le circuit de métal liquide comprend une dérivation (29) sur laquelle est installé le dispositif (33) pour soutirer l'hydrogène et le tritium ainsi qu'un moyen de chauffage supplémentaire (34) en amont dudit dispositif (33).

4. Installation de régénération selon la revendication 1, caractérisée en ce que le moyen de rétention de l'oxygène est un autre piège froid (23) où règne une température inférieure à la température de cristallisation de l'oxyde et supérieure à la température de cristallisation de l'hydrure.

5. Procédé de régénération de pièges froids (4) chargés en hydrure et en oxyde d'un métal liquide, caractérisé en ce qu'il consiste à faire circuler du métal liquide à travers les pièges à une température suffisante pour dissoudre l'hydrure et l'oxyde, à soutirer de l'hydrogène dissous de manière à maintenir la concentration en hydrogène dissous au-dessous de la saturation et à faire passer le métal liquide dans un autre piège froid (23) refroidi à une température inférieure à la température de cristallisation de l'oxyde et supérieure à la température de cristallisation de l'hydrure.

6. Procédé de régénération selon la revendication 5, caractérisé en ce que le métal liquide est réchauffé avant d'y soutirer de l'hydrogène et refroidi à la température supérieure à la température de cristallisation de l'hydrure avant de passer par l'autre piège froid (23).

**Patentansprüche**

1. Anlage für die Regeneration von mit Flüssigmetallhydriden und -oxiden saturierten Kühlfallen (4),

**dadurch gekennzeichnet,**
daß sie einen Kreislauf (11, 12, 13, 20, 29) umfaßt, der mit Flüssigmetall gefüllt ist, in dem mindestens eine zu regenerierende Falle (4) angeordnet ist, dieser Kreislauf ist ausgestattet mit Geräten (14), um eine Zirkulation des Flüssigmetalls in dem Kreislauf und durch die Falle zu errichten, mit Geräten (17), um die Temperatur des Flüssigmetalls bei, für die Auflösung des Oxids und des Hydrids ausreichenden, Werten zu regulieren, mit einer Vorrichtung (33), um den gelösten Wasserstoff und das gelöste Tritium zu sättigen und mit einer, mit einem Gerät zur Sauerstoffretention ausgestatteten, Ableitung (20).

2. Anlage zur Regeneration gemäß Anspruch 1, dadurch gekennzeichnet, daß die Vorrichtung (33) zur Sättigung von Wasserstoff und Tritium von einer Membran (35, 36) zur Permeation von Wasserstoff und Tritium gebildet wird, deren eine Seite mit dem Kreislauf des Flüssigmetalls, und deren andere Seite mit einem Kreislauf für Saugluftpumpen bezüglich dem Kreislauf des Flüssigmetalls kommuniziert, sowie einem Behälter (42), der auf dem Pumpenkreislauf errichtet ist und mit einem, Wasserstoff und Tritium bindenden, Feststoff versehen ist.

3. Anlage zur Regeneration gemäß Anspruch 1, dadurch gekennzeichnet, daß der Kreislauf des Flüssigmetalls eine Ableitung (29) umfaßt, auf welcher die Vorrichtung (33) zur Sättigung von Wasserstoff und Tritium eingerichtet ist, sowie aufwärts in der besagten Vorrichtung (33) ein zusätzliches Gerät zu Heizung (34).

4. Anlage zur Regeneration gemäß Anspruch 1, dadurch gekennzeichnet, daß das Gerät zur Sauerstoffretention eine andere Kühlfalle (23) ist, in der eine kleinere Temperatur als die Temperatur zu Kristallisation des Oxids und größer als die Temperatur zur Kristallisation des Hydrids herrscht.

5. Verfahren zur Regeneration von, mit Flüssigmetallhydriden und -oxiden saturierten, Kühlfallen (4), dadurch gekennzeichnet, daß es darin besteht, das Flüssigmetall durch die Fallen bei einer, für die Lösung der Hydride und Oxide ausreichenden, Temperatur zirkulieren zu lassen, den gelösten Wasserstoff so zu saturieren, daß die gelöste Wasserstoffkonzentration unter der Sättigung gehalten wird, und das Flüssigmetall in eine andere Kühlfalle (23) übergehen zu lassen, die auf eine Temperatur, kleiner als die Temperatur der Oxidkristallisation und größer als die Temperatur der Hydridkristallisation, abgekühlt ist.

6. Verfahren zur Regeneration gemäß Anspruch 5, dadurch gekennzeichnet, daß das Flüssigmetall vor seiner Wasserstoffsättigung erwärmt wird und vor seinem Übergehen auf die andere Kühlfalle (23) auf eine Temperatur größer als die Temperatur der Hydridkristallisation abgekühlt wird.

**Claims**

1. Installation for the regeneration of cold traps (4) loaded with the hydride and oxide of a liquid metal, characterized in that it includes a circuit (11, 12, 13, 20, 29) filled with liquid metal on which at least one trap (4) to be regenerated is disposed, the circuit being provided with means (14) to establish a circulation of the liquid metal in the circuit and through the trap, means (17) to adjust the temperature of the liquid metal to values sufficient to dissolve the oxide and the hydride, and a device (33) to draw off the dissolved hydrogen and the tritium and a dump (20) equipped with an oxygen retention device.

2. Regeneration installation according to claim 1, characterized in that the device (33) to draw off the hydrogen and tritium is constituted by a membrane (35, 36) for permeating the hydrogen and tritium and having one face communicating with the liquid metal circuit and another face with a partial vacuum pumping circuit with respect to the metal liquid circuit, as well as a tank (42) established on the pumping circuit and lined with a solid fixing the hydrogen and the tritium.

3. Regeneration installation according to claim 1, characterized in that the liquid metal circuit includes a dump (29) on which the device (33) is installed so as to draw off the hydrogen and the tritium, as well as an additional heating device (34) upstream of said device (33).

4. Regeneration installation according to claim 1, characterized in that the oxygen retention device is another cold trap (23) where the existing temperature is less than the oxide crystallization temperature and greater than the hydride crystallization temperature.

5. Method to regenerate cold traps (4) loaded with the hydride and oxide of a liquid metal, characterized in that it consists of causing the liquid metal to circulate through the traps at a sufficient temperature so as to dissolve the hydride and the oxide, to draw off the dissolved hydrogen so as to keep the dissolved hydrogen concentration below saturation and to have the liquid metal pass into another cold trap (23) cooled to a temperature lower than the oxide crystallization temperature and greater than the hydride crystalization temperature.

6. Regeneration method according to claim 5, characterized in that the liquid metal is heated before drawing off the hydrogen from it and cooled to the temperature greater than the hydride crystallization temperature before passing through the other cold trap (23).

FIG. 1

FIG. 2

EP 0 394 129 B1

FIG. 3